# NEUE EUROPÄISCHE PATENTSCHRIFT

(11) **EP 2 844 431 B2**
(45) Veröffentlichungstag und Bekanntmachung des Hinweises auf die Entscheidung über den Einspruch: **16.06.2021**
(45) Hinweis auf die Patenterteilung: 06.09.2017
(21) Anmeldenummer: 13727035.1
(22) Anmeldetag: 18.04.2013
(51) Int. Cl.: B25B 5/12, B23Q 3/02

(54) **SPANNVORRICHTUNG**
CLAMPING DEVICE
DISPOSITIF DE SERRAGE

(30) Priorität: 04.05.2012 DE 102012103921
(43) Veröffentlichungstag der Anmeldung: 11.03.2015
(73) Patentinhaber: DE-STA-CO Europe GmbH, 61440 Oberursel (DE)
(72) Erfinder: KAISER, Richard, 61350 Bad Homburg vor der Hoehe (DE)
(74) Vertreter: Wolf, Michael
(86) Internationale Anmeldenummer: PCT/DE2013/100145
(87) Internationale Veröffentlichungsnummer: WO 2013/163989

(56) Entgegenhaltungen:
- EP-A2- 1 524 081
- DE-A1-102009 054 153
- DE-U1- 20 209 237
- US-B1- 6 616 133

## Beschreibung

Die Erfindung betrifft eine Spannvorrichtung gemäß dem Oberbegriff des Patentanspruchs 1. Eine solche Spannvorrichtung zeigt das Dokument EP 1 524 081 A2. Eine Spannvorrichtung der eingangs genannten Art ist auch nach der DE 202 09 237 U1 bekannt. Diese besteht aus einem linear beweglichen, von einem Antrieb (typischer Weise ein Pneumatikzylinder) betätigbaren Stellglied, das über eine Kniehebelmechanik mit einem schwenkbar gelagerten Spannelement (auch Spannarm genannt) wirkverbunden ausgebildet ist und das zum einen ein antriebsseitiges und zum anderen ein kniehebelseitiges Adapterteil aufweist, wobei diese zur Festlegung eines Öffnungswinkels des Spannelements über eine gegeneinander gerichtete Verzahnung und eine Spannschraube zueinander verstellbar ausgebildet sind.

Der Erfindung liegt die Aufgabe zugrunde, eine Spannvorrichtung der eingangs genannten Art zu verbessern.

Diese Aufgabe ist mit einer Spannvorrichtung der eingangs genannten Art durch die im Kennzeichen des Patentanspruchs 1 aufgeführten Merkmale gelöst.

Andere vorteilhafte Weiterbildungen ergeben sich aus den abhängigen Patentansprüchen.

Die erfindungsgemäße Spannvorrichtung einschließlich ihrer vorteilhaften Weiterbildungen gemäß der abhängigen Patentansprüche wird nachfolgend anhand der zeichnerischen Darstellung zweier Ausführungsbeispiele näher erläutert.

Es zeigt
- Figur 1: im Schnitt eine Spannvorrichtung mit dem erfindungsgemäß ausgebildeten Adapterteil;
- Figur 2: in Alleinstellung und in Seitenansicht das Adapterteil gemäß Figur 1;
- Figur 3: in Alleinstellung und im Schnitt das Adapterteil gemäß Figur 1; und
- Figur 4: im Schnitt eine andere Ausführungsform der erfindungsgemäßen Spannvorrichtung, bei der der Stab am kniehebelseitigen Adapterteil und der Einsteckbereich am antriebsseitigen Adapterteil ist.

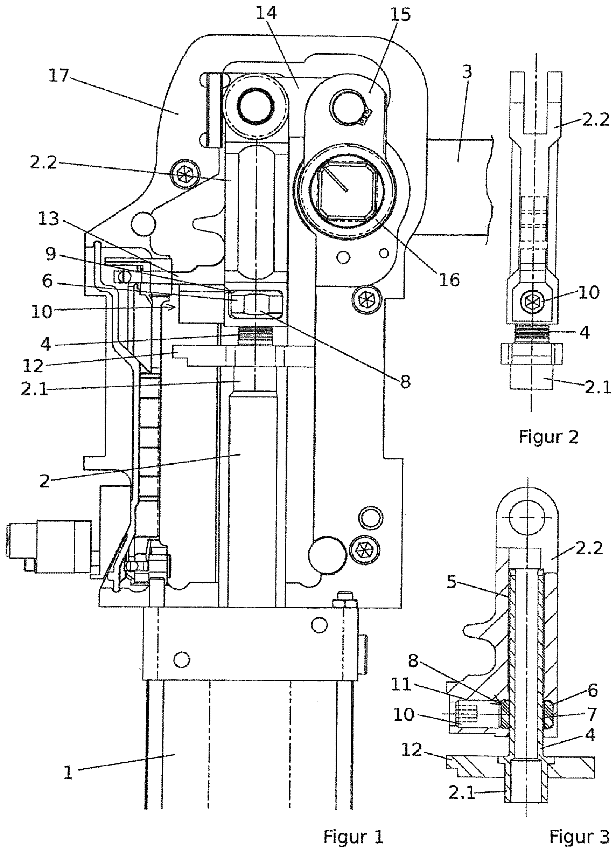

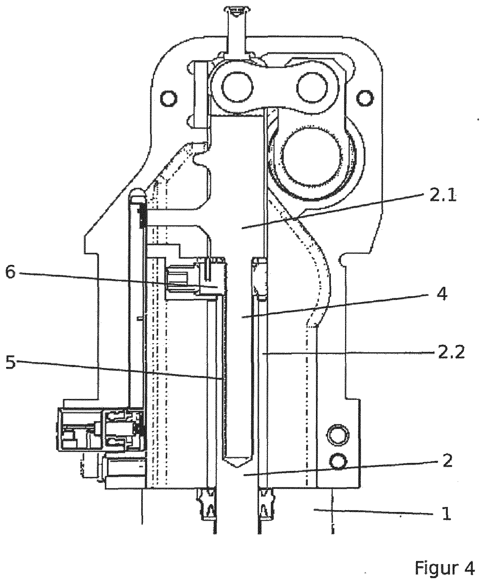

Die in Figur 1 bzw. 4 dargestellte Spannvorrichtung besteht aus einem linear beweglichen, von einem Antrieb 1 (Pneumatik- oder Hydraulikantrieb mit Kolben und Kolbenstange) betätigbaren Stellglied 2, das direkt mit einer Kolbenstange des Antriebs 1 verbunden und über eine Kniehebelmechanik mit einem schwenkbar gelagerten Spannelement 3 (vorzugsweise ein so genannter Spannarm) wirkverbunden ausgebildet ist. Noch etwas genauer betrachtet, ist vorgesehen, dass das kniehebelseitige Adapterteil 2.2 bzw. 2.1 gelenkig mit einer Lasche 14, die Lasche 14 wiederum gelenkig mit einem Hebelarm 15 und der Hebelarm 15 verdrehfest mit einer Schwenkwelle 16 des Spannelements 3 verbunden ausgebildet ist. Außerdem weist das Stellglied 2 zum einen ein antriebsseitiges und zum anderen ein kniehebelseitiges Adapterteil 2.1, 2.2 auf, wobei diese zur Festlegung eines Öffnungswinkels des Spannelements 3 zueinander verstellbar ausgebildet sind.

Wesentlich für die erfindungsgemäße Spannvorrichtung ist nun, und diesbezüglich wird auch auf die Figuren 2, 3 und 4 verwiesen, dass eines der Adapterteile 2.1 einen in Stellrichtung erstreckten, profilierten Stab 4 und das andere Adapterteil 2.2 einen den Stab 4 mindestens teilweise umschließenden Einsteckbereich 5 zur Aufnahme des Stabes 4 bzw. zur vollständigen Umschließung des Stabes 4 aufweist, wobei zur Lagefestlegung der Adapterteile 2.1, 2.2 zueinander ein sowohl gegen den profilierten Stab 4 als auch gegen den Einsteckbereich 5 verspannbares Fixierelement 6 vorgesehen ist.

Besonders bevorzugt ist dabei vorgesehen, dass das Fixierelement 6 als ein vom Stab 4 durchgriffener Ring mit einer Innen- und einer Außenwandung ausgebildet ist, wobei die Innenwandung eine zum profilierten Stab 4 formschlüssig passende Profilierung 7 und die Außenwandung mehrere, vorzugsweise vier bis acht, plane Flächen 8 aufweist. Besonders bevorzugt ist das Fixierelement 6 dabei schraubenmutterartig bzw. in Form einer Schraubenmutter und weiterhin den profilierten Stab 4 vollständig umschließend ausgebildet, wobei ferner die Profilierung 7 der Innenwandung und auch die Profilierung des Stabes 4 als steigungsfreie Innengewinde ausgebildet sind. Unter "steigungsfrei" ist dabei ein Gewinde mit der Steigung "null" zu verstehen - an sich also kein echtes Gewinde, sondern lediglich eine Verzahnung die einem Gewinde optisch ähnelt.

Um die Lage der beiden Adapterteile 2.1, 2.2 auf einfache Weise zueinander festlegen zu können, ist weiterhin bevorzugt vorgesehen, dass der Durchmesser des Stabes 4 im Bereich seiner Profilierung stets kleiner als ein von der Innenwandung des Fixierelements 6 definierter Durchmesser ausgebildet ist. Dabei ist das Fixierelement 6 außerdem bei der Ausführungsform nach Figur 1 bis 3 in einer Einschuböffnung 9 am kniehebelseitigen Adapterteil 2.2 und in dieser gegen eine Verschiebung in Hauptaxialrichtung des Stellgliedes 2 gesichert angeordnet. Bei der Ausführungsform gemäß Figur 4 ist das Fixierelement 6 in einer Einschuböffnung am antriebsseitigen Adapterteil 2.2 angeordnet. Das Fixierelement 6 ist somit aufgrund der genannten beiden Durchmesser zwar quer, aber nicht längs zum Stab 4 verschieblich bzw. verstellbar ausgebildet.

Ferner ist weiterhin bevorzugt am kniehebelseitigen (Figur 1 bis 3) bzw. am antriebseitigen (Figur 4) Adapterteil 2.2 ein Stellelement 10 zur Verschiebung des Fixierelements 6 quer zur Hauptaxialrichtung des Stellgliedes 2 und gegen den profilierten Stab 4 vorgesehen. Dieses Stellelement 10 ist dabei als in einem am Adapterteil 2.2 vorgesehenen, quer zum Stab 4 orientierten Gewinde 11 geführte Schraube, insbesondere Madenschraube, ausgebildet. Weiterhin ist am Gehäuse 17 der Spannvorrichtung eine bei Bedarf (mittels eines Deckelelements) verschließbare Öffnung 18 zur Betätigung des Stellements 10 von außerhalb der Spannvorrichtung vorgesehen.

Wie aus der DE 10 2009 054 153 A1 bekannt, ist weiterhin an jedem Adapterteil 2.1, 2.2 ein Endstellungsgeber 12, 13 vorgesehen. Diese Endstellungsgeber 12, 13 arbeiten mit entsprechenden Sensoren zur Abfragung der Stellposition des Spannarms zusammen. Besonders bevorzugt ist bei der erfindungsgemäßen Lösung vorgesehen (siehe Figur 1 bis 3), dass das Fixierelement 6 zwischen den beiden Endstellungsgebern 12, 13 und/oder am Endstellungsgeber 13 des kniehebelseitigen Adapterteils 2.2 angeordnet ist.

Die Einstellung der erfindungsgemäße Spannvorrichtung funktioniert wie folgt:

Ausgangspunkt der Betrachtung sind zueinander fixierte Adapterteile 2.1, 2.2. Um den Öffnungswinkel des Spannelements 3 zu verändern, wird zunächst der Deckel von der Öffnung 18 entfernt. Dann wird mit einem Imbusschlüssel die vorzugsweise als Innenimbus ausgebildete, mit ihrer Betätigungsseite In Richtung Öffnung 18 orientierte Madenschraube (Stellelement 10) gelöst. Dies führt dazu, dass sich die Profilierung des Fixierelements 6 von der Profilierung des Stabes 4 löst, d. h. die beiden Adapterteile 2.1, 2.2 können nunmehr in Längsrichtung zueinander verstellt werden. Ist die gewünschte Position gefunden, wird durch Anziehen des Stellelements 10 das Fixierelement 6 wieder gegen den Stab 4 verspannt, so dass die beiden Adapterteile 2.1, 2.2 wieder zueinander fixiert sind. Abschließend wird noch der Decke wieder in die Öffnung 18 eingesetzt und die Verstellung des Öffnungswinkels ist abgeschlossen.

### Bezugszeichenliste

- 1: Antrieb
- 2: Stellglied
- 2.1: Adapterteil
- 2.2: Adapterteil
- 3: Spannelement
- 4: Stab
- 5: Einsteckbereich
- 6: Fixierelement
- 7: Profilierung
- 8: Fläche
- 9: Einschuböffnung
- 10: Stellelement
- 11: Gewinde
- 12: Endstellungsgeber
- 13: Endstellungsgeber
- 14: Lasche
- 15: Hebelarm
- 16: Schwenkwelle
- 17: Gehäuse

## Patentansprüche

1. Spannvorrichtung, umfassend ein linear bewegliches, von einem Antrieb (1) betätigbares Stellglied (2), das über eine Kniehebelmechanik mit einem schwenkbar gelagerten Spannelement (3) wirkverbunden ausgebildet ist und das zum einen ein antriebsseitiges und zum anderen ein kniehebelseitiges Adapterteil (2.1, 2.2) aufweist, wobei diese zur Festlegung eines Öffnungswinkels des Spannelements (3) zueinander verstellbar ausgebildet sind, wobei eines der Adapterteile (2.1) einen in Stellrichtung erstreckten, profilierten Stab (4) und das andere Adapterteil (2.2) einen Einsteckbereich (5) zur Aufnahme des Stabes (4) aufweist, wobei zur Lagefestlegung der Adapterteile (2.1, 2.2) zueinander ein sowohl gegen den profilierten Stab (4) als auch gegen den Einsteckbereich (5) verspannbares Fixierelement (6) vorgesehen ist,
**dadurch gekennzeichnet,**
**dass** wahlweise am kniehebelseitigen oder am antriebsseitigen Adapterteil ein Stellelement (10) zur Verschiebung des mit einem Gewinde mit der Steigung null versehenen Fixierelements (6) quer zur Hauptaxialrichtung des Stellgliedes (2) und gegen den mit einem Gewinde mit der Steigung null versehenen Stab (4) vorgesehen ist.

2. Spannvorrichtung nach Anspruch 1,
**dadurch gekennzeichnet,**
**dass** das Fixierelement (6) als ein vom Stab (4) durchgriffener Ring mit einer Innen- und einer Außenwandung ausgebildet ist, wobei die Innenwandung eine zum Stab (4) formschlüssig passende Profilierung (7) und die Außenwandung mehrere, vorzugsweise vier bis acht, plane Flächen (8) aufweist.

3. Spannvorrichtung nach Anspruch 2,
**dadurch gekennzeichnet,**
**dass** der Durchmesser des Stabes (4) im Bereich seiner Profilierung stets kleiner als ein von der Innenwandung des Fixierelements (6) definierter Durchmesser ausgebildet ist.

4. Spannvorrichtung nach einem der Ansprüche 1 bis 3,
**dadurch gekennzeichnet,**
**dass** das Fixierelement (6) in einer Einschuböffnung (9) am kniehebelseitigen Adapterteil (2.2) und in dieser gegen eine Verschiebung in Hauptaxialrichtung des Stellgliedes (2) gesichert angeordnet ist.

5. Spannvorrichtung nach einem der Ansprüche 1 bis 4,
**dadurch gekennzeichnet,**
**dass** das Fixierelement (6) den Stab (3) vollständig umschließend ausgebildet ist.

6. Spannvorrichtung nach einem der Ansprüche 1 bis 5,
**dadurch gekennzeichnet,**
**dass** am kniehebetseitigen Adapterteil (2.2) ein Stellelement (10) zur Verschiebung des Fixierelements (6) quer zur Hauptaxialrichtung des Stellgliedes (2) und gegen den profilierten Stab (4) vorgesehen ist.

7. Spannvorrichtung nach Anspruch 6,
**dadurch gekennzeichnet,**
**dass** das Stellelement (10) als in einem am kniehebelseitigen Adapterteil (2.2) vorgesehenen, quer zum Stab (4) orientierten Gewinde (11) geführte Schraube, insbesondere Madenschraube, ausgebildet ist.

8. Spannvorrichtung nach einem der Ansprüche 1 bis 7,
**dadurch gekennzeichnet,**
**dass** an jedem Adapterteil (2.1, 2.2) ein Endstellungsgeber (12, 13) vorgesehen und das Fixierelement (6) zwischen den beiden Endstellungsgebern (12, 13) angeordnet ist.

9. Spannvorrichtung nach einem der Ansprüche 1 bis 8,
**dadurch gekennzeichnet,**
**dass** das Fixierelement (6) am Endstellungsgeber (13) des kniehebelseitigen Adapterteils (2.2) angeordnet ist.

10. Spannvorrichtung nach einem der Ansprüche 1 bis 9,
**dadurch gekennzeichnet,**
**dass** der Einsteckbereich (5) den Stab (4) vollständig umschließend ausgebildet ist.

## Claims

1. Clamping device, comprising a linearly movable actuating element (2) which can be actuated by a drive (1) and which is configured operatively connected via a toggle lever mechanism to a pivotally mounted clamping element (3) and which, on the one hand, has an adapter part (2.1, 2.2) on the drive side, and on the other hand, on the toggle lever side, wherein these are configured to be adjustable relative to one another for determining an opening angle of the clamping element (3), wherein one of the adapter parts (2.1) has a profiled rod (4) extending in the positioning direction and the other adapter part (2.2) has a plug-in region (5) for receiving the rod (4), wherein a fixing element (6) which can be tensioned both against the profiled rod (4) and against the plug-in region (5) is provided for fixing the position of the adapter parts (2.1, 2.2) relative to one another,
**characterized in that**
a positioning element (10) for displacing the fixing element (6) provided with a thread with an inclination of zero transversely to the main axial direction of the actuating element (2) and against the rod (4) provided with a thread with an inclination of zero is provided, optionally on the toggle lever side or on the drive side adapter part.

2. Clamping device according to claim 1,
**characterized in that**
the fixing element (6) is configured as a ring, which is penetrated by the rod (4), and which has an inner wall and an outer wall, wherein the inner wall has a profiling (7) conforming positively to the rod (4) and the outer wall has a plurality of, preferably four to eight, plane surfaces (8).

3. Clamping device according to claim 2, **characterized in that** the diameter of the rod (4), in the region of its profiling, is always configured less than a diameter defined by the inner wall of the fixing element (6).

4. Clamping device according to one of claims 1 to 3, **characterized in that** the fixing element (6) is arranged in an insertion opening (9) on the toggle lever side adapter part (2.2) and is secured in this against displacement in the main axial direction of the actuating element (2).

5. Clamping device according to one of claims 1 to 4, **characterized in that** the fixing element (6) is configured completely surrounding the rod (3).

6. Clamping device according to one of claims 1 to 5, **characterized in that** a positioning element (10) for displacing the fixing element (6) transversely with respect to the main axial direction of the actuating element (2) and against the profiled rod (4) is provided on the toggle lever side adapter part (2.2).

7. Clamping device according to claim 6, **characterized in that** the positioning element (10) is configured as a thread (11) guided screw, in particular a grub screw, oriented transversely with respect to the rod (4) and provided on the toggle lever side adapter part (2.2).

8. Clamping device according to one of claims 1 to 7,
**characterized in that**
an end position transmitter (12, 13) is provided on each adapter part (2.1, 2.2), and the fixing element (6) is arranged between the two end position transmitters (12, 13).

9. Clamping device according to one of claims 1 to 8,
**characterized in that**
the fixing element (6) is arranged on the end position transmitter (13) of the toggle lever side adapter part (2.2).

10. Clamping device according to one of claims 1 to 9,
**characterized in that**
the plug-in region (5) is configured completely surrounding the rod (4).

## Revendications

1. Dispositif de serrage, comprenant un membre de réglage (2) mobile de façon linéaire, pouvant être actionné par un entraînement (1), qui est conçu relié en coopération avec un élément de serrage (3) pivotant par le biais d'un mécanisme de genouillère et qui présente une pièce adaptatrice (2.1, 2.2) côté entraînement d'une part et côté genouillère d'autre part, dans lequel celles-ci sont conçues réglables entre elles pour déterminer un angle d'ouverture de l'élément de serrage (3), dans lequel une des pièces adaptatrices (2.1) présente une tige (4) profilée s'étendant dans le sens de réglage et l'autre pièce adaptatrice (2.2) présente une partie d'enfichage (5) pour recevoir la tige (4), dans lequel pour fixer la position des pièces adaptatrices (2.1, 2.2) entre elles, un élément de fixation (6) pouvant être tendu tant contre la tige (4) profilée que contre la partie d'enfichage (5) est prévu,
**caractérisé en ce**
**qu'**un élément de réglage (10) pour déplacer l'élément de fixation (6) doté d'un filet à pas de zéro transversalement au sens axial principal du membre de réglage (2) et contre la tige (4) dotée d'un filet à pas de zéro, est prévu au choix sur la pièce adaptatrice côté genouillère ou côté entraînement.

2. Dispositif de serrage selon la revendication 1,
**caractérisé en ce que**
l'élément de fixation (6) est conçu en tant qu'un anneau avec une paroi intérieure et extérieure pouvant être traversé par la tige (4), dans lequel la paroi intérieure présente un profilé (7) en complémentarité de forme avec la tige (4) et la paroi extérieure présente plusieurs faces planes (8) de préférence quatre à huit.

3. Dispositif de serrage selon la revendication 2,
**caractérisé en ce que**
le diamètre de la tige (4), au niveau de son profilé, est conçu toujours plus petit qu'un diamètre défini par la paroi intérieure de l'élément de fixation (6).

4. Dispositif de serrage selon l'une des revendications 1 à 3 ,
**caractérisé en ce que**
l'élément de fixation (6) est disposé dans une ouverture d'insertion (9) sur la pièce adaptatrice (2.2) côté genouillère et est fixé dans celle-ci contre un déplacement dans le sens axial principal du membre de réglage (2).

5. Dispositif de serrage selon l'une des revendications 1 à 4,
**caractérisé en ce que**
l'élément de fixation (6) est conçu entourant la tige (3) complètement.

6. Dispositif de serrage selon l'une des revendications 1 à 5,
**caractérisé en ce**
**qu'**un élément de réglage (10) pour déplacer l'élément de fixation (6) transversalement au sens axial principal du membre de réglage (2) et contre la tige (4) profilée, est prévu sur la pièce adaptatrice (2.2) côté genouillère.

7. Dispositif de serrage selon la revendication 6,
**caractérisé en ce que**
l'élément de réglage (10) est conçu en tant qu'une vis, en particulier qu'une vis sans tête, dirigée dans un filetage (11) orienté transversalement à la tige (4) prévu sur la pièce adaptatrice (2.2) côté genouillère.

8. Dispositif de serrage selon l'une des revendications 1 à 7,
**caractérisé en ce**
**qu**'un indicateur de fin de course (12, 13) est prévu sur chaque pièce adaptatrice (2.1, 2.2) et l'élément de fixation (6) est disposé entre les deux indicateurs de fin de course (12, 13).

9. Dispositif de serrage selon l'une des revendications 1 à 8,
**caractérisé en ce que**
l'élément de fixation (6) est disposé sur l'indicateur de fin de course (13) de la pièce adaptatrice (2.2) côté genouillère.

10. Dispositif de serrage selon l'une des revendications 1 à 9,
**caractérisé en ce que**
la partie d'enfichage (5) est conçue entourant la tige (4) complètement.
